# EUROPEAN PATENT SPECIFICATION

(11) **EP 3 370 293 B1**
(45) Date of publication and mention of the grant of the patent: **01.01.2020**
(21) Application number: 16859815.9
(22) Date of filing: 26.10.2016
(51) Int. Cl.: H01M 10/052, C22C 9/10, C22C 14/00, C22C 19/03, C22C 21/02, C22C 22/00, C22C 38/02, H01M 2/16, H01M 4/38, H01M 10/0587

(54) **LITHIUM ION SECONDARY BATTERY AND METHOD FOR PRODUCING LITHIUM ION SECONDARY BATTERY**
LITHIUM-IONEN-SEKUNDÄRBATTERIE UND VERFAHREN ZUR HERSTELLUNG EINER LITHIUM-IONEN-SEKUNDÄRBATTERIE
BATTERIE SECONDAIRE AU LITHIUM-ION ET SON PROCÉDÉ DE PRODUCTION

(30) Priority: 26.10.2015 JP 2015209866
(43) Date of publication of application: 05.09.2018
(73) Proprietor: Hitachi, Ltd., Tokyo 100-8280 (JP)
(72) Inventor: KIMURA Naoki, Tokyo 100-8280 (JP); SEKI Eiji, Tokyo 100-8280 (JP)
(74) Representative: Manitz Finsterwald Patent- und Rechtsanwaltspartnerschaft mbB
(86) International application number: PCT/JP2016/081651
(87) International publication number: WO 2017/073585

(56) References cited:
- WO-A1-2006/106782
- WO-A1-2012/029699
- WO-A1-2012/036127
- WO-A1-2015/107910
- JP-A- 2001 319 634
- JP-A- 2007 220 451
- JP-A- 2007 220 451
- US-A1- 2008 076 017
- US-A1- 2014 272 572

## Description

### Technical Field

The present invention relates to a lithium ion secondary battery and a method for producing a lithium ion secondary battery.

### Background Art

In view of a problem of global warming and depletion of fuel, an electric vehicle (EV) has been developed by each auto manufacturer. As a power source of the EV, use of a lithium ion secondary battery with high energy density is required. In general, a lithium ion secondary battery has a positive electrode, a negative electrode, and a separator as a main constitutional element. The separator consists of a porous resin such as polyethylene or polypropylene, and its function is to have pass-through of lithium ions only while insulating the positive electrode and negative electrode. Furthermore, regarding the negative electrode, an active material containing silicon (Si) has been expected in recent years in order to achieve the high energy densification. However, with pure Si only, volume changes associated with charging and discharging are large. As such, determinations are made to suppress the volume changes associated with charging and discharging by using SiOₓ in which Si is trapped within SiO₂, Si alloy in which Si is trapped within a metal material such as Ti or Fe, or the like.

As a technique for suppressing a decrease in battery characteristics that is associated with expansion-shrinkage of a negative electrode, a complex for a power storage device characterized in that it consists of silicon oxide (A) expressed in SiOₓ (1.77 ≤ x ≤ 1.90) and a conductive material (B) formed of a carbonaceous material as a raw material capable of adsorbing and desorbing lithium ions is disclosed in PTL 1. It is described that, according to this constitution, a deterioration of cycle characteristics which is caused by disruption of conductive network as a result of expansion·shrinkage of an electrode and disruption·degradation of a negative electrode material can be suppressed.

Furthermore, disclosed in PTL 2 is a negative electrode for a lithium ion secondary battery which has, on the surface of a current collector, a metal containing layer with thickness of 20 to 70 µm that contains a carbon material and silicon and/or tin as a metal capable of alloying with lithium of 1 to 100 parts by mass relative to 100 parts by mass of the carbon material, and a carbon material layer on top of the metal containing layer, characterized in that the carbon material in the metal containing layer includes natural graphite and a carbonaceous material, and the metal containing layer is obtained by mixing the metal, natural graphite, and a precursor of the carbonaceous material followed by a heating treatment. According to the above constitution, a metal containing layer containing a carbon material and a metal capable of alloying is provided on the surface of a current collector and a carbon material layer is provided on the metal containing layer. As such, even when the metal is pulverized due to expansion·shrinkage associated with charging and discharging, separation of the metal from the metal containing layer does not occur. Furthermore, since the metal containing layer contains a carbon material which has low expansion rate compared to the metal and good adhesiveness to a current collector, the conductivity can be maintained without deteriorating the adhesiveness of the metal containing layer to a current collector even when charging and discharging are repeated. It is described that, as a result, a lithium ion secondary battery manufactured by using a negative electrode for a lithium ion secondary battery that is described in PTL 2 has high discharge capacity, high initial charging and discharging efficiency, and excellent cycle characteristics.

Meanwhile, high safety·reliability is required for a lithium ion secondary battery. As a technique for enhancing the reliability of a lithium ion secondary battery, a battery separator consisting of insulating microparticles, which are stable at least against an organic electrolyte solution, and an organic binder and having 60° gloss of 5 or more is disclosed in PTL 3. It is described that, according to the constitution, if a separator is formed such that the filling property of the insulating microparticles in separator is further enhanced and the 60° gloss is 5 or more, a more compact and uniform structure can be obtained so that a separator with high reliability can be constituted.

Furthermore, disclosed in PTL 4 is a separator for nonaqueous electrolyte secondary battery having a resin base and a porous heat resistant layer disposed on the base, in which the porous heat resistant layer includes at least an inorganic filler and a hollow body, the hollow body has a shell part made of an acrylic resin and a hollow part formed inside the hollow body, and the shell part is provided with an opening which extends through the shell part and spatially connects the hollow part to the outside thereof. It is described that, according to the above constitution, as the hollow body is included within the porous heat resistant layer, the separator can be provided with excellent flexibility, elasticity, or a property of maintaining the shape, and as such, collapse of the separator is prevented. For example, as it is unlikely to be affected by the stress (pressure) which may be applied to a separator according to the battery restraining force or repetitive charging and discharging, it becomes possible to maintain stably the shape of a separator (typically, thickness). Accordingly, the distance between a positive electrode and a negative electrode of a nonaqueous electrolyte secondary battery can be suitably maintained so that a capacity decrease caused by a tiny internal short circuit or self discharge can be prevented. Furthermore, a suitable reaction of a gas generator can be obtained during overcharging. It is also described that, since the hollow body is electrochemically stable in a nonaqueous electrolyte and can gather the nonaqueous electrolyte in a hollow part, an excellent liquid-retaining property can be stably maintained and exhibited over a long period of time.

PTL 5 discloses a lithium secondary battery comprising an alumina-containing surface layer having a thickness of 10 µm, a polyethylene separator having a thickness of 25 µm and a negative electrode, the active material of which is an alloy obtained by mixing silicon and titanium in a weight ratio of 10:1.

PTL 6 discloses a lithium secondary battery comprising a porous polyethylene separator having a single layer with a thickness of 16 µm and a negative electrode, the active material of which is Si₆₉Ti_{11.5}Ni_{11.5}Fe₈ or Si₆₀Ti₂₀Ni₂₀.

PTL 7 discloses lithium batteries comprising a negative electrode, the active material of which is an alloy obtained by mixing Si and Ti in a weight ratio of 63:37 or 91:9 or an alloy obtained by mixing Si and Cu in a weight ratio of 80:20, and different two-layer separators each containing a porous polyethylene layer having a thickness ranging from 12 to 16 µm and a heat-resistant aramid or polyimide layer having a thickness ranging from 5 to 8 µm.

### Citation List

### Patent Literature

PTL 1: JP 5058494 B2
PTL 2: JP 2006-59704 A
PTL 3: JP 2008-210782 A
PTL 4: JP 2015-106511 A
PTL 5: JP 2007-220451 A
PTL 6: US 2014-272572 A1
PTL 7: US 2008-76017 A

### Summary of Invention

### Technical Problem

In recent years, there is an ever-increasing demand for a lithium ion secondary battery with high energy density, high cycle characteristics, and high safety. As described in the above, when an active material containing Si is used for having high energy densification of a lithium ion secondary battery, high stress during expansion·shrinkage remains as a problem. In general, the biggest problem associated with the expansion·shrinkage of a battery is lowered safety. Namely, it is considered that short circuit of a positive electrode and a negative electrode is caused by stress occurring during expansion·shrinkage of a negative electrode. As such, in the case of using an active material containing Si, a solution for preventing the short circuit caused by high stress during expansion·shrinkage is essentially required. However, there is a possibility that the above described PTLs 1 to 4 may not be sufficient for achieving the high level that is recently required in terms of the prevention of short circuit.

As such, in consideration of the circumstances that are described above, the present invention is to provide a lithium ion secondary battery that prevents short circuit in which energy density, cycle characteristics, and safety are all balanced at high levels; and a method for producing a lithium ion secondary battery which allows production of such lithium ion secondary battery.

### Solution to Problem

A lithium ion secondary battery according to the present invention includes: a positive electrode; a negative electrode; and a separator provided between the positive electrode and the negative electrode, wherein the negative electrode contains a negative electrode active material containing silicon, and the separator has a constitution in which a resin layer and a porous layer are laminated, the thickness of the porous layer is 2µm or more and 10µm or less when the thickness of the resin layer is 25µm or more and 30pm or less, and the thickness of the porous layer is 5pm or more and 20µm or less when the thickness of the resin layer is 15µm or more but less than 25 µm, wherein the negative electrode active material containing silicon is an alloy of silicon which is Si₇₀Ti₁₅Fe₁₅, Si₇₀Cu₃₀, or Si₇₀Ti₃₀.

### Advantageous Effects of Invention

According to the present invention, a lithium ion secondary battery that prevents short circuit in which energy density, cycle characteristics, and safety are all balanced at high levels; and a method for producing a lithium ion secondary battery which allows production of such lithium ion secondary battery can be provided.

### Brief Description of Drawings

[FIG. 1] FIG. 1 is a cross-sectional drawing schematically illustrating one example of a lithium ion secondary battery according to the present invention.
[FIG. 2] FIG. 2 is a cross-sectional drawing schematically illustrating another example of a lithium ion secondary battery according to the present invention.
[FIG. 3] FIG. 3 is a drawing schematically illustrating one example of the constitution of the positive electrode of FIGS. 1 and 2.
[FIG. 4] FIG. 4 is a drawing schematically illustrating one example of the constitution of the positive electrode, negative electrode, and separator of FIGS. 1 and 2.
[FIG. 5] FIG. 5 is a photographic image illustrating an area of a conventional separator in which scorching has occurred.
[FIG. 6] FIG. 6 is a cross-sectional drawing schematically illustrating the first example of a separator of a lithium ion secondary battery according to the present invention.
[FIG. 7] FIG. 7 is a cross-sectional drawing schematically illustrating the second example of a separator of a lithium ion secondary battery according to the present invention.
[FIG. 8] FIG. 8 is a cross-sectional drawing schematically illustrating the third example of a separator of a lithium ion secondary battery according to the present invention.

### Description of Embodiments

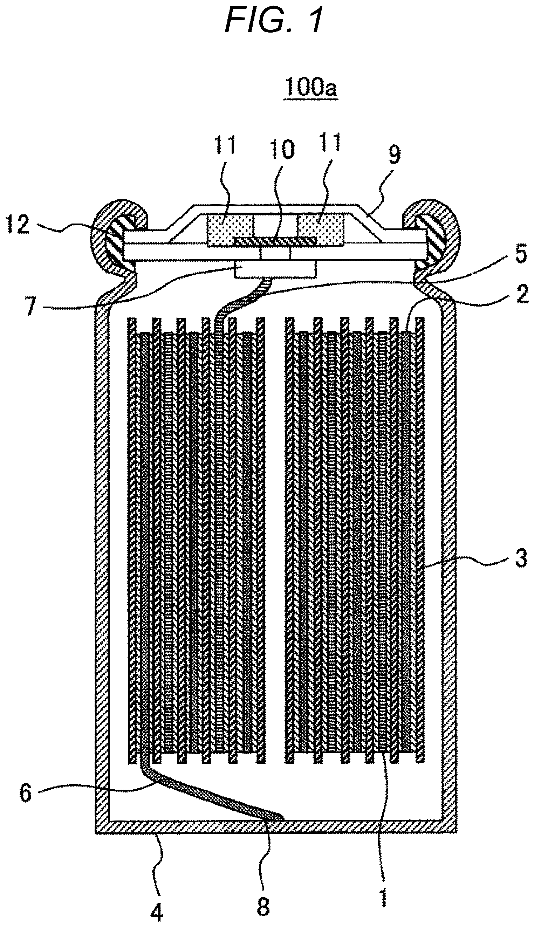

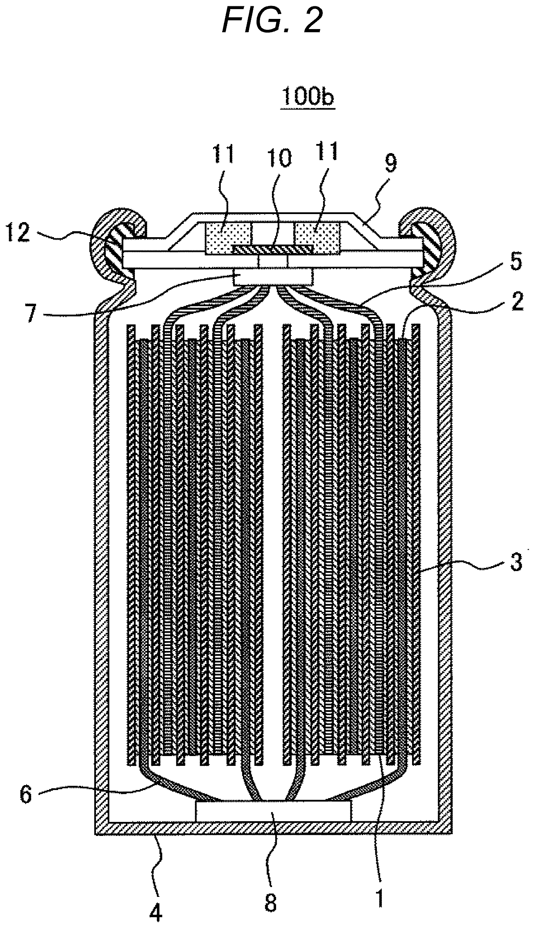

Hereinbelow, embodiments of the present invention are explained in view of the drawings. FIG. 1 is a cross-sectional drawing schematically illustrating one example of a lithium ion battery according to the present invention. FIG. 2 is a cross-sectional drawing schematically illustrating part of the positive electrode of FIG. 1. FIG. 1 illustrates a so-called wound type lithium ion secondary battery. As illustrated in FIG. 1, a lithium ion secondary battery 100a according to the present invention has a positive electrode 1, a negative electrode 2, and a separator 3 disposed between the positive electrode 1 and the negative electrode 2. The positive electrode 1 and the negative electrode 2 are wound in a cylinder shape while the separator 3 is inserted between them such that they are not in direct contact with each other, thus forming a group of wound electrodes. The positive electrode 1 is connected to a positive electrode current collecting lead part 7 via a positive electrode current collecting lead stripe 5, and the negative electrode 2 is connected to a negative electrode current collecting lead part 8 via a negative electrode current collecting lead stripe 6. The electrode group constitutes a wound group inserted with the positive electrode current collecting lead stripe 5 and the negative electrode current collecting lead stripe 6, and it is encased in a battery can 4. Furthermore, a nonaqueous electrolyte solution (not illustrated) is injected to the inside of the battery can 4.

FIG. 2 is a cross-sectional drawing schematically illustrating another example of a lithium ion secondary battery according to the present invention. FIG. 1 relates to an embodiment in which the positive electrode lead stripe 5 and the negative electrode lead stripe 8 are disposed, one for each. However, it is also possible that a plurality of the positive electrode lead stripe 5 and the negative electrode lead stripe 8 are disposed as illustrated in FIG. 2.

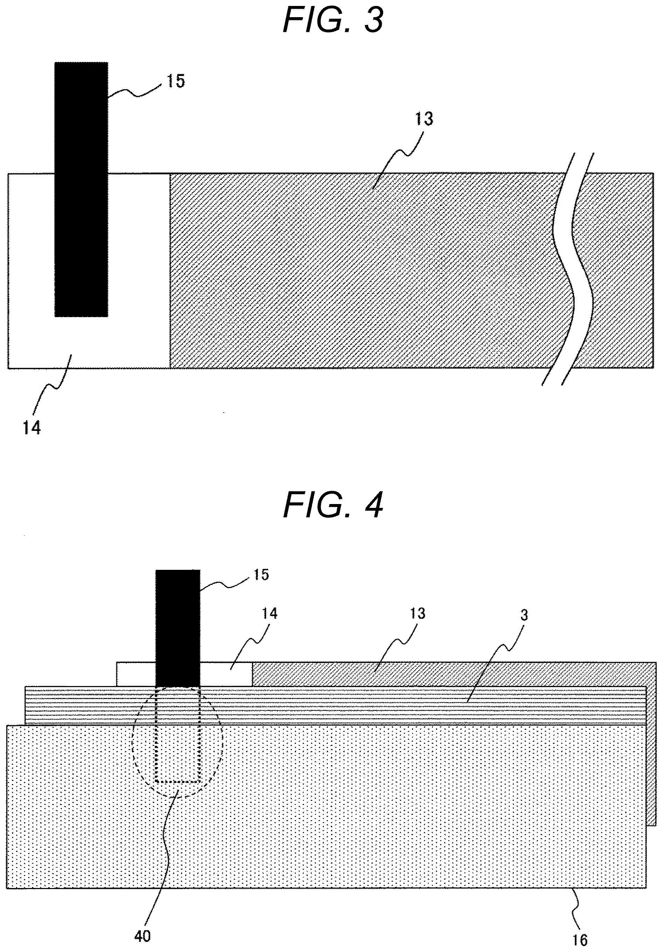

FIG. 3 is a drawing schematically illustrating one example of the constitution of the positive electrode of FIGS. 1 and 2. FIG. 3 is a drawing (exploded view) expressing the state before winding. As illustrated in FIG. 3, the positive electrode 1 has a positive electrode mixture layer 13 which contains a positive electrode active material coated on the positive electrode current collector, and a positive electrode mixture layer non-coated part 14 which is not coated with a positive electrode mixture layer. In the positive electrode mixture layer non-coated part 14, a positive electrode current collecting lead 15 is disposed. In addition, the negative electrode 2 has the same constitution as the positive electrode 1. Namely, it has a negative electrode mixture layer which contains a negative electrode active material coated on a negative electrode current collector and a negative electrode mixture layer non-coated part which is not coated with a negative electrode mixture layer, and in the negative electrode mixture layer non-coated part, a negative electrode current collecting lead is disposed.

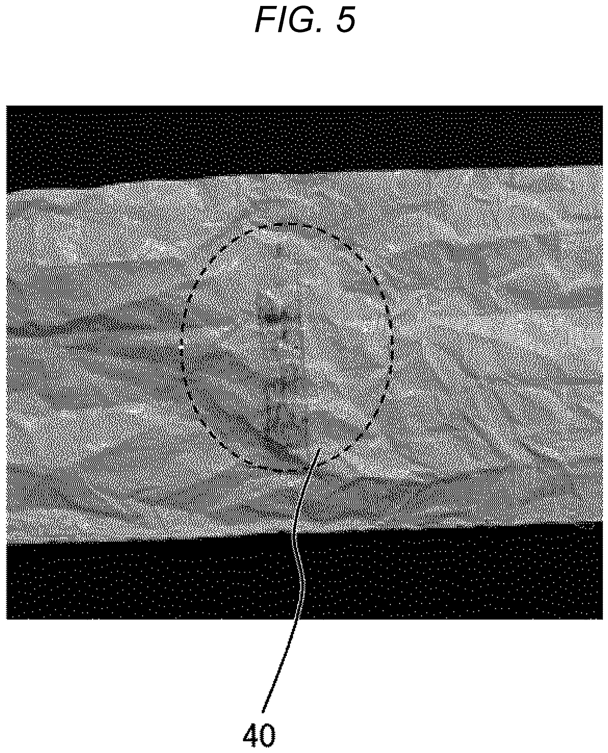

FIG. 4 is a drawing schematically illustrating one example of the constitution of the positive electrode, negative electrode, and separator of FIGS. 1 and 2. FIG. 4 is a drawing (exploded view) expressing the state before winding. Furthermore, for easy recognition of the drawing, illustration of the non-coated part of a negative electrode and the negative electrode current collecting lead 6 is omitted in FIG. 4. The positive electrode 1, the negative electrode 2, and the separator 3 have a lamination constitution as illustrated in FIG. 4. In order to have a safety enhancement of a lithium ion secondary battery, the inventors of the present invention conducted an examination for a short circuit area of a lithium ion secondary battery. As a result, it was found that, in a conventional lithium ion secondary battery which contains Si as a negative electrode active material, the battery short circuit occurs in a part 40 in which the separator 3 overlaps with the positive electrode current collecting lead 15. FIG. 5 is photographic image illustrating the short circuit area of a conventional lithium ion secondary battery (a part of a separator which overlaps with a positive electrode current collecting lead) . It is recognized from FIG. 5 that scorching has occurred in a part in which the separator 3 and the positive electrode current collecting lead 15 overlap each other.

In general, the major disadvantage associated with the expansion and shrinkage of a battery is a safety problem, and it is considered that short circuit of a positive electrode and a negative electrode occurs due to mispositioning that is associated with expansion of a negative electrode. However, the inventors of the present invention found that there are more causes for having short circuit other than that. Specifically, it was found that a battery in which a negative electrode having a negative electrode active material containing Si with hardness at certain level or higher is used allows high energy densification and achievement of long service life, but in case of a resin separator which is generally used, the separator is under pressure so that short circuit may easily occur.

Accordingly, the inventors of the present invention conducted intensive studies on a constitution of a lithium ion secondary battery to prevent the short circuit. As a result, it was found that, by having a constitution of the separator 3 which allows relief of the stress occurring during expansion·shrinkage of a negative electrode by lamination of a resin layer and a porous layer, and, after figuring out the relationship between the hardness of a negative electrode active material and film thickness of a resin layer and a porous layer, by setting each of them within a predetermined range, the aforementioned short circuit can be prevented. The present invention is based on this finding.

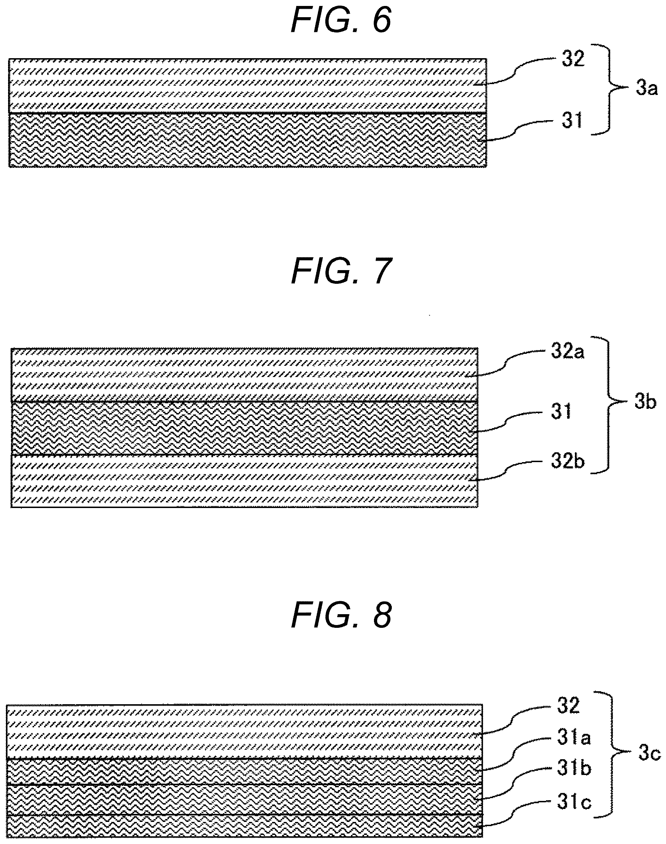

Hereinbelow, the constitution of the separator 3 of a lithium ion secondary battery according to the present invention is explained in detail. FIGS. 6 to 8 are cross-sectional drawings schematically illustrating the first example to the third example of a separator of a lithium ion secondary battery according to the present invention. As illustrated in FIG. 6, the separator 3a basically has a constitution in which a resin layer 31 and a porous layer 32 are laminated. The resin layer 31 is in contact with the negative electrode 2 and the porous layer 32 is in contact with the positive electrode 1. The porous layer 32 is disposed on a surface of the resin layer 31 which is at least in contact with the positive electrode 1. In addition, the hardness of a negative electrode active material is set at 10 GPa or more and 20 GPa or less, and when the thickness of the resin layer 31 is 25 µm or more and 30 µm or less, the thickness of the porous layer 32 is set at 2 µm or more and 10 µm or less and when the thickness of resin layer 31 is 15 µm or more but less than 25 µm, the thickness of the porous layer is set at 5 µm or more and 20 µm or less. By having this constitution, the stress caused by expansion·shrinkage of a negative electrode is absorbed by the separator 3a so that the short circuit of a battery can be prevented.

As illustrated in FIG. 6, it is acceptable that one layer of the resin layer 31 and one layer of the porous layer 32 are laminated in the separator 3a. However, it is also acceptable that the porous layers 32a and 32b are laminated on surfaces of both sides of the resin layer 31 as illustrated in FIG. 7. Namely, it is acceptable that the lamination is made in the order of the porous layer 32b, the resin layer 31, and the porous layer 32a. In addition, it is also acceptable that the resin layer 31 consists of plural layers, or a 3-layer structure of the resin layers 31a to 31c as illustrated in FIG. 8 is also acceptable. When the resin layer 31 or the porous layer 32 is disposed such that each is laminated with number of 2 or more layers, the total film thickness of the resin layer 31 or the porous layer 32 is set to be within the aforementioned range.

The resin layer 31 is not particularly limited, but a heat resistant resin such as polyethylene, polypropylene, polyamide, polyamideimide, polyimide, polysulfone, polyether sulfone, polyphenyl sulfone, or polyacrylonitrile is suitable.

The porous layer 32 is preferably a porous material having flexibility and thermal conductivity to which an electrolyte solution can infiltrate. Preferred examples thereof include silicon dioxide (SiO₂), aluminum oxide (Al₂O₃), montmorillonite, mica, zinc oxide (ZnO), titanium oxide (TiO₂), barium titanate (BaTiO₃), and zirconium oxide (ZrO₂). Among them, SiO₂ and Al₂O₃ are particularly preferable in view of cost.

Porosity of the porous layer 32 is preferably 50% or more and 90% or less, and more preferably 80% or more and 90% or less. Because the porous layer 32 according to the present invention is to relieve mainly the stress, it has higher porosity than the porosity of a case in which heat resistance is required (for example, PTL 4).

Hereinbelow, explanations are given for the constitution other than the separator 3 of a lithium ion secondary battery according to the present invention. On a single surface or both surfaces of a positive electrode current collector (for example, aluminum foil), a positive electrode mixture slurry containing positive electrode active material is coated and dried, press molding is carried out using a roll press or the like, and cutting to a predetermined size is carried out to produce the positive electrode 1 constituting a lithium ion secondary battery. Similarly, on a single surface or both surfaces of a negative electrode current collector (for example, copper foil), a negative electrode mixture slurry containing negative electrode active material is coated and dried, press molding is carried out using a roll press or the like, and cutting to a predetermined size is carried out to produce the negative electrode 2 constituting a lithium ion secondary battery.

The positive electrode active material used for the positive electrode 1 is not particularly limited as long as it is a lithium compound capable of adsorbing and releasing lithium ions. Examples thereof include composite oxide of lithium and transition metal such as lithium manganese oxide, lithium cobalt oxide, or lithium nickel oxide. One of them may be used either singly, or it is possible to use a mixture of two or more kinds of them. If necessary, by mixing the positive electrode active material with a binder (polyimide, polyamide, polyvinylidene fluoride (PVDF), styrene butadiene rubber (SBR), or a mixture thereof), a thickening agent, a conductive material, a solvent, or the like, a positive electrode mixture slurry is prepared.

The negative electrode active material used for the negative electrode 2 essentially has a negative electrode active material containing Si, and it may be also a mixture containing, other than the negative electrode active material containing Si, one or more kinds selected from artificial graphite, natural graphite, non-graphatizable carbons, metal oxide, metal nitride, and activated carbon. By changing their mixing ratio, the discharge capacity can be modified. Their mixing ratio (mixing mass ratio) is preferably as follows; negative electrode active material containing Si : graphite = 20 : 80 to 70 : 30. When the mixing ratio of the negative electrode active material containing Si is less than that value, high energy density cannot be achieved. On the other hand, when the mixing ratio is higher than that value, expansion of a negative electrode is excessively high so that high cycle characteristics cannot be obtained.

As for the negative electrode active material containing Si, an alloy (Si alloy) containing Si and a different kind of a metal element is used, which is Si₇₀Ti₁₅Fe₁₅, Si₇₀Cu₃₀ or Si₇₀Ti₃₀. Furthermore, Si alloy is in a state in which fine particles of metal silicon (Si) are dispersed in each particle of other metal elements, or in a state in which other metal elements are dispersed in each Si particle. As a method for producing the Si alloy, mechanical synthesis based on mechanical alloy method is possible, or production can be made by heating and cooling a mixture of Si particles and other metal elements.

It is possible that the Si alloy is coated with carbon. Hardness of the negative electrode active material is set at 10 GPa or more and 20 GPa or less as described in the above. Hardness of the negative electrode active material can be measured by using a nanoindentation method or the like. By mixing the negative electrode active material with a binder, a thickening agent, a conductive material, a solvent, or the like, if necessary, a negative electrode mixture slurry is produced.

As for the electrolyte solution, an. organic electrolyte solution prepared by dissolving one or more kinds of lithium salts selected from LiPF₆, LiBF₄, LiC10₄, LiN (C_{z}F₅SO₂)₂, and the like into one or more kinds of nonaqueous solvent selected from ethylene carbonate, propylene carbonate, butylene carbonate, dimethyl carbonate, ethyl methyl carbonate, diethyl carbonate, γ-butyrolactone, γ-valerolactone, methyl acetate, ethyl acetate, methyl propionate, tetrahydrofuran, 2-methyltetrahydrofuran, 1,2-dimethoxyethan, 1-ethoxy-2-methoxyethene, 3-methyltetrahydrofuran, 1,2-dioxane, 1,3-dioxane, 1,4-dioxane, 1,3-dioxolane, 2-methyl-1,3-dioxolane, 4-methyl-1,3-dioxolane, and the like, or a known electrolyte used in battery including a solid electrolyte having conductivity of a lithium ion, a gel phase electrolyte, and a molten salt can be used.

As for the battery can 4 and the battery cover 9, aluminum or stainless steel is preferably used.

The discharge capacity of the negative electrode of a lithium ion secondary battery according to the present invention (negative electrode capacity) is preferably 600 Ah/kg or more and 1000 Ah/kg or less. That is because, when it is less than 600 Ah/kg, the expansion amount is small, and thus it is unlikely to have an occurrence of short circuit, and, when it is more than 1000 Ah/kg, the battery cycle service life is significantly impaired so that it is difficult to be used for a battery. Furthermore, when it is less than 600 Ah/kg, contribution to high energy densification is small.

The lithium ion secondary battery according to the present invention is suitable for suppressing short circuit of a wound type battery illustrated in FIGS. 1 and 2, and, as the surface of the separator 3 that is at least in contact with the positive electrode current collector lead has the constitution of the separator according to the present invention, the effect of the present invention can be obtained.

### Examples

The lithium ion secondary battery illustrated in FIG. 1 was produced (Examples 1 to 15, Comparative Examples 1 to 9 and Reference Examples 1 and 2), and battery characteristics were evaluated. Hereinbelow, the battery constitution is described.

### (1) Production of lithium ion secondary battery

As a positive electrode active material, LiNi_{0.8}Co_{0.1}Mn_{0.1} was used for all. As a negative electrode active material containing Si, Si₇₀Ti₁₅Fe₁₅, Si₇₀Cu₃₀ or Si₇₀Ti₃₀ was used in Examples 1 to 15. In Comparative Examples 1 to 9, Si₇₀Ti₁₅Fe₁₅ or SiO was used. In Reference Examples 1 and 2, Si₇₀Ti₁₅Fe₁₅ or Si (pure Si) was used. A mixture in which the negative electrode active material containing Si and graphite are mixed at predetermined mixing ratio was used as a negative electrode active material. Furthermore, for any negative electrode active material containing Si, the material coated with carbon to have thickness of 10 nm or so was used. Constitution of the negative electrode active materials of Examples 1 to 15, Comparative Examples 1 to 9, and Reference Examples 1 and 2 is shown in the following Table 1.

As for the separator, polyethylene was used as a resin layer and SiO₂ was used as a porous layer. Film thickness of the resin layer and porous layer is also described in the following Table 1.

As an electrolyte solution, an electrolyte of 1 M LiPF₆ was used, and the electrolyte dissolved in solvent (EC : EMC = 1 : 3, % by volume) was used.

A negative electrode mixture slurry was prepared and applied on top of a current collecting foil followed by pressing to produce a negative electrode. The negative electrode slurry was prepared by using, other than the aforementioned negative electrode active material and a binder, acetylene black as a conductive material with weight ratio of 92 : 5 : 3 in the order, and mixing with NMP as a solvent such that the viscosity is 5000 to 8000 mPa and also the solid content ratio is 70% or more and 90% or less. Furthermore, the viscosity value of the slurry in the present invention indicates the viscosity 600 seconds after stirring the slurry at 0.5 rpm. Furthermore, a planetary mixer was used for the slurry production.

By using the obtained negative electrode slurry, application on copper foil was carried out with a table top comma coater. The application was made such that, like the positive electrode which will be described later, a negative electrode non-coated part not applied with the negative electrode active material mixture is formed on part of the copper foil.

As for the current collecting foil, each of the three kinds of stainless foil, copper foil containing a different kind of an element (one or more kinds of zirconium, silver, and tin) in copper with purity of 99.9% or more, and copper foil with purity of 99.99% or more, was used.

As for the application amount, the negative electrode application amount was adjusted for each such that the volume ratio between the positive electrode and negative electrode is 1.0 when the positive electrode application amount of 240 g/m² is used. First drying was carried out by passing it through a drying furnace with drying temperature of 100°C. In addition, the electrode was subjected to vacuum drying for 1 hour at 300°C (second drying), and the density was adjusted by using a roll press. With regard to the density, pressing was carried out so as to have the electrode porosity of 20 to 40% or so, the negative electrode containing Si and SiO was prepared to have density of 1.4 g/cm³, and the negative electrode containing Si alloy was prepared to have density of 2.3 g/cm³ or so.

The positive electrode having a lead which has been produced accordingly is illustrated in FIG. 2. As illustrated in FIG. 3, the positive electrode has a coated part 13 and a non-coated part 14, and an Al current collecting lead 15 is welded by ultrasonication to the non-coated part. As for the positive electrode current collecting lead 15, those with thickness of 0.05 mm were used. When the thickness of the positive electrode current collector lead 15 is 0.05 mm or more, the effect of the present invention is particularly obtained.

As a positive electrode current collecting foil, aluminum foil was used. On both surfaces of the aluminum foil, a positive electrode mixture layer was formed. As a positive electrode active material mixture, a positive electrode active material of LiNi_{0.s8}Co_{0.1}Mn_{0.1} was used, and by having a conductive material consisted of a carbon material and PVDF as a binder (binding material) with their weight ratio at 90 : 5 : 5, a positive electrode slurry was prepared. The application amount was set at 240 g/m². For application of the positive electrode active material mixture onto aluminum foil, the viscosity of the positive electrode slurry was adjusted with N-methyl-2-pyrrolidone as a dispersion solvent. At that time, as described in the above, the application was made such that the positive electrode non-coated 14 that is not applied with the positive electrode active material mixture is formed on part of the aluminum foil. Namely, the aluminum foil is exposed on the positive electrode non-coated part 14. The positive electrode was prepared to have density of 3.5 g/cm³ by using a roll press after drying the positive electrode mixture layer.

The prepared positive electrode and negative electrode were wound while they are mediated by a separator, and then inserted to a battery can. The negative electrode current collecting lead stripe 6 was collectively welded by ultrasonication to the nickel negative electrode current collecting lead part 8, and the current collecting lead part was welded to the bottom of the can. Meanwhile, the positive electrode current collecting lead stripe 5 was welded by ultrasonication to the aluminum current collecting lead part 7, and then the aluminum lead part was subjected to resistance welding to the cover 9. After injecting an electrolyte solution, the cover was sealed by coking of the can 4 to obtain a battery. Furthermore, between the top part of the can and the cover, a gasket 12 was inserted. Accordingly, a battery of 1 Ah grade was produced.

### (2) Measurement of hardness of negative electrode active material

The hardness was measured based on a nanoindentation method. As an apparatus, Nano Indenter XP/DCM manufactured by Keysight Technologies was used. The indentation depth was 200 nm and the average value of 10 active material particles containing Si was calculated. The measurement results are shown in the following Table 2.

### (3) Evaluation of battery characteristics

### (i) Measurement of negative electrode capacity

A 10 mAh grade model cell was produced by using single electrode Li metal. 0.1 CA static current charging was carried out with lower limit voltage of 0.01 V when compared to the counter electrode Li followed by static voltage charging for 2 hours . Then, after resting for 15 minutes, 0.1 CA static current discharging was carried out till to have upper limit voltage of 1.5 V. From discharged current value (A) × time for discharging (h) ÷ Weight of active material (kg) at that time, the discharge capacity (Ah/kg) was calculated. In the present invention, a lithium ion secondary battery which has negative electrode discharge capacity of 600 Ah/kg or more and 1000 Ah/kg or less was produced. The measurement results are described in the following Table 2.

### (ii) Measurement of energy density, cycle characteristics (capacity retention rate), and safety (short circuit rate)

After carrying out static current charging with voltage of 4.2 V and current of 1/3 CA by using the produced cell, static voltage charging was carried out for 2 hours. As for the discharging, static current discharging with voltage of 2.0 V and current of 1/3 CA was carried out. 3 Cycles of this process were carried out. Then, after static current charging with voltage of 3.7 V and current of 1/3 CA followed by static voltage charging for 2 hours, the cell was allowed to stand for 1 week. After the standing, a cell with 3.4 V or less was defined as short circuit, and number of short circuits among 10 cells was calculated as occurrence rate of short circuit.

After that, to calculate the energy density, static current charging with voltage of 4.2 V and current of 1/3 CA was carried out followed by static voltage charging for 2 hours. As for the discharging, static current discharging with voltage of 2.0 V and current of 1/3 CA was carried out. From the discharge capacity (Ah) and mean voltage (V), the energy (Wh) was calculated. According to division of the energy by the cell weight, the energy density (Wh/kg) was calculated. Furthermore, when 100 cycles of the above charging and discharging conditions are carried out, according to the division of the capacity at the hundredth cycle by the capacity at the first cycle, the cycle capacity retention rate was calculated. The measurement results are described in the following Table 2.

### [Table 1]

**Table 1 Constitution of batteries of Examples 1 to 15, Comparative Examples 1 to 9, and Reference Examples 1 and 2**

| | Negative electrode active material | | Separator | |
|---|---|---|---|---|
| | Negative electrode active material containing Si | Mixing ratio between negative electrode active material containing Si and graphite | Film thickness of resin layer (µm) | Film thickness of porous layer (µm) |
| Example 1 | Si₇₀Ti₁₅Fe₁₅ | 50:50 | 15 | 5 |
| Example 2 | Si₇₀Ti₁₅Fe₁₅ | 50:50 | 15 | 20 |
| Example 3 | Si₇₀Ti₁₅Fe₁₅ | 50:50 | 18 | 5 |
| Example 4 | Si₇₀Ti₁₅Fe₁₅ | 50:50 | 20 | 5 |
| Example 5 | Si₇₀Ti₁₅Fe₁₅ | 50:50 | 20 | 20 |
| Example 6 | Si₇₀Ti₁₅Fe₁₅ | 50:50 | 25 | 2 |
| Example 7 | Si₇₀Ti₁₅Fe₁₅ | 50:50 | 25 | 5 |
| Example 8 | Si₇₀Ti₁₅Fe₁₅ | 50:50 | 25 | 10 |
| Example 9 | Si₇₀Ti₁₅Fe₁₅ | 50:50 | 30 | 2 |
| Example 10 | Si₇₀Ti₁₅Fe₁₅ | 50:50 | 30 | 5 |
| Example 11 | Si₇₀Ti₁₅Fe₁₅ | 50:50 | 30 | 10 |
| Example 12 | Si₇₀Cu₃₀ | 50:50 | 18 | 5 |
| Example 13 | Si₇₀Ti₃₀ | 50:50 | 18 | 5 |
| Example 14 | Si₇₀Ti₁₅Fe₁₅ | 20:80 | 18 | 5 |
| Example 15 | Si₇₀Ti₁₅Fe₁₅ | 70:30 | 18 | 5 |
| Comparative Example 1 | Si₇₀Ti₁₅Fe₁₅ | 50:50 | 15 | 2 |
| Comparative Example 2 | Si₇₀Ti₁₅Fe₁₅ | 50:50 | 18 | 2 |
| Comparative Example 3 | Si₇₀Ti₁₅Fe₁₅ | 50:50 | 20 | 2 |
| Comparative Example 4 | Si₇₀Ti₁₅Fe₁₅ | 50:50 | 25 | 0 |
| Comparative Example 5 | Si₇₀Ti₁₅Fe₁₅ | 50:50 | 30 | 0 |
| Comparative Example 6 | Si₇₀Ti₁₅Fe₁₅ | 10:90 | 18 | 2 |
| Comparative Example 7 | Si₇₀Ti₁₅Fe₁₅ | 20:80 | 18 | 2 |
| Comparative Example 8 | - | 0:100 | 18 | 2 |
| Comparative Example 9 | Sio | 50:50 | 18 | 2 |
| Reference Example 1 | Si₇₀Ti₁₅Fe₁₅ | 80:20 | 18 | 5 |
| Reference Example 2 | Si | 50:50 | 18 | 5 |

### [Table 2]

**Table 2 Evaluation results of batteries of Examples 1 to 15, Comparative Examples 1 to 9, and Reference Examples 1 and 2**

| | Hardness of negative electrode active material (Gpa) | Battery characteristics | | | |
|---|---|---|---|---|---|
| | | Negative electrode capacity (Ah/kg) | Energy density (Wh/kg) | Cycle characteristics | Safety |
| | | | | Capacity retention rate (%) | Short circuit rate (%) |
| Example 1 | 15 | 800 | 250 | 80 | 0 |
| Example 2 | 15 | 800 | 240 | 80 | 0 |
| Example 3 | 15 | 800 | 250 | 80 | 0 |
| Example 4 | 15 | 800 | 250 | 80 | 0 |
| Example 5 | 15 | 800 | 240 | 80 | 0 |
| Example 6 | 15 | 800 | 240 | 80 | 0 |
| Example 7 | 15 | 800 | 250 | 80 | 0 |
| Example 8 | 15 | 800 | 240 | 80 | 0 |
| Example 9 | 15 | 800 | 240 | 80 | 0 |
| Example 10 | 15 | 800 | 240 | 80 | 0 |
| Example 11 | 15 | 800 | 240 | 80 | 0 |
| Example 12 | 10 | 800 | 250 | 80 | 0 |
| Example 13 | 20 | 800 | 250 | 80 | 0 |
| Example 14 | 15 | 600 | 220 | 90 | 0 |
| Example 15 | 15 | 1000 | 270 | 60 | 0 |
| Comparative Example 1 | 15 | 800 | Impossible to measure | Impossible to measure | 80 |
| Comparative Example 2 | 15 | 800 | Impossible to measure | Impossible to measure | 80 |
| Comparative Example 3 | 15 | 800 | Impossible to measure | Impossible to measure | 80 |
| Comparative Example 4 | 15 | 800 | Impossible to measure | Impossible to measure | 80 |
| Comparative Example 5 | 15 | 800 | Impossible to measure | Impossible to measure | 80 |
| Comparative Example 6 | 15 | 500 | 210 | 90 | 10 |
| Comparative Example 7 | 15 | 600 | Impossible to measure | Impossible to measure | 80 |
| Comparative Example 8 | 0.2 | 360 | 200 | 90 | 0 |
| Comparative Example 9 | 8 | 750 | 220 | 80 | 0 |
| Reference Example 1 | 15 | 1100 | 280 | 20 | 0 |
| Reference Example 2 | 11 | 600 | 200 | 10 | 20 |

As shown in Tables 1 and 2, it is found that the lithium ion secondary battery according to the present invention (Examples 1 to 115) achieves a high level in all of the energy density, cycle characteristics, and safety.

More specifically, in Examples 1 to 11, an active material in which Si₇₀Ti₁₅Fe₁₅ was used as a negative electrode active material containing Si and mixed with graphite at ratio of 50% by mass is used, and film thickness of a resin layer and film thickness of a porous layer of the separator are varied. It was found that the short circuit rate is 0% for all 10 cells, illustrating the cells have high safety and also high energy density and high cycle characteristics.

In Examples 12 and 13, the negative electrode active material containing Si of Example 3 was changed and Si₇₀Cu₃₀ and Si₇₀Ti₃₀ are used instead of Si₇₀Ti₁₅Fe₁₅ of Example 3. It was also found that Examples 12 and 13 also have high safety and also high energy density and high cycle characteristics.

In Examples 14 and 15, the graphite mixing ratio of Example 3 was changed. The negative electrode capacity was found to be modified by changing the mixing ratio.

On the other hand, it was found that all of Comparative Examples 1 to 9 in which the constitution of a lithium ion secondary battery is outside the range of the present invention cannot sufficiently satisfy any of the energy density, cycle characteristics, and safety.

More specifically, it was found that, as the separator of Comparative Examples 1 to 7 has film thickness of a resin layer and film thickness of a porous layer that are different from those defined by the present invention and due to an easy occurrence of short circuit, it is impossible to achieve the high safety. As a result of disassembling and examining the battery, scorching referred to as a black spot was observed from a separator between the current collecting lead part of the positive electrode and the negative electrode mixture layer. It is easily considered to be a result of mispositioning of an electrode member that is caused by high expansion amount of a negative electrode and the stress during expansion·shrinkage of a negative electrode. Furthermore, as a result of measuring the expansion amount for each of the Si alloy as an active material containing Si used in Examples (mixture with 50% by mass of graphite), SiO used in Comparative Examples (mixture with 50% by mass of graphite), Si (mixture with 50% by mass of graphite, and graphite, the result was found to be 1.2 times for Si alloy, 1.2 times also for SiO, and 3 times or so for Si compared to graphite. The expansion amount indicates a difference of the thickness of the negative electrode mixture layer between 100% SOC (State Of Charge) (counter electrode Li potential of 0.01 V) and 0% SOC (counter electrode Li potential of 1.5 V).

In Comparative Example 6, the resin layer and porous layer of the separator are outside those defined by the present invention, and the amount of the negative electrode active material containing Si is also small. Because the amount of the negative electrode active material containing Si is small, it is unlikely to have short circuit, but high energy densification cannot be achieved.

In Comparative Example 8, only the graphite is present as a negative electrode active material, and because the negative electrode active material containing Si is not included, the high energy densification cannot be expected.

In Comparative Example 9, the negative electrode active material containing Si is SiO, and the electrode density is as low as 1.4 g/cm³ compared to the electrode density of 2.3 g/cm³ of Si alloy. However, because the irreversible capacity is as high as 16% compared to the irreversible capacity of 8% of Si alloy, the high energy densification cannot be expected. Furthermore, since SiO tends to have soft particles, it was found that short circuit is not likely to occur even with the same expansion rate.

In Reference Example 1, the film thickness of a resin layer and the film thickness of a porous layer of the separator satisfy the requirements of the present invention. However, as there is a large amount of the negative electrode active material containing Si, the cycle characteristics are significantly deteriorated so that the practical application is not possible.

In Reference Example 2, the film thickness of a resin layer and the film thickness of a porous layer of the separator satisfy the requirements of the present invention. However, as the negative electrode active material containing Si is Si, it was found that the discharge capacity and energy density of the negative electrode are low, cycle characteristics are poor, and it cannot be used as a battery. As a result of disassembling and examining the battery, separation of the negative electrode mixture layer was illustrated. This can be considered to be a phenomenon that is caused by a high expansion amount.

Furthermore, although the resin layer was a single layer of polyethylene in the above Examples, it was confirmed that the same effect as those Examples is obtained even from a case in which a resin layer with three-layer structure as illustrated in FIG. 8 (polyethylene layer 31b is provided between polypropylene layers 31a and 31c) is employed instead of the resin layer or a case in which Al₂O₃ porous layer is employed instead of the SiO₂ porous layer of the Examples.

As explained in the above, it was illustrated that a lithium ion secondary battery that prevents short circuit of a battery and in which energy density, cycle characteristics, and safety are all balanced at high levels, and a method for producing the lithium ion secondary battery can be provided by the present invention.

Furthermore, the present invention is not limited to the aforementioned Examples, and various modification examples are included herein. For example, the aforementioned Examples have been explained in detail to help easy understanding of the present invention, and the present invention is not necessarily limited to those having all the constitutions that are described above. Furthermore, part of a constitution of any Example may be replaced with a constitution of another Example, and also a constitution of an Example may be added to a constitution of another Example. Furthermore, part of the constitution of each Example may be added, deleted, or replaced with another constitution.

### Reference Signs List

- 1: positive electrode
- 2: negative electrode
- 3, 3a, 3b, 3c: separator
- 31, 31a, 31b, 31c: resin layer
- 32, 32a, 32b: porous layer
- 4: battery can
- 5: positive electrode current collecting lead stripe
- 6: negative electrode current collecting lead stripe
- 7: positive electrode current collecting lead part
- 8: negative electrode current collecting lead part
- 9: battery cover
- 10: rupture valve
- 11: positive electrode terminal part
- 12: gasket
- 13: positive electrode mixture layer
- 14: positive electrode non-coated part
- 15: positive electrode current collecting lead

## Claims

1. A lithium ion secondary battery comprising:
a positive electrode;
a negative electrode; and
a separator provided between the positive electrode and the negative electrode,
wherein the negative electrode contains a negative electrode active material containing silicon, and
the separator has a constitution in which a resin layer and a porous layer are laminated, the thickness of the porous layer is 2 µm or more and 10 µm or less when the thickness of the resin layer is 25 µm or more and 30 µm or less, and the thickness of the porous layer is 5 µm or more and 20 µm or less when the thickness of the resin layer is 15 µm or more but less than 25 µm,
wherein the negative electrode active material containing silicon is an alloy of silicon which is Si₇₀Ti₁₅Fe₁₅, Si₇₀Cu₃₀, or Si₇₀Ti₃₀.

2. The lithium ion secondary battery according to claim 1, wherein the negative electrode has a negative electrode current collector and a negative electrode mixture layer disposed on the negative electrode current collector and contains the negative electrode active material, the positive electrode has a positive electrode current collector, and a positive electrode mixture layer and a positive electrode mixture layer non-coated part disposed on the positive electrode current collector,
a positive electrode current collector lead is disposed on the positive electrode mixture layer non-coated part and a wound group in which the positive electrode, negative electrode, separator, and the positive electrode current collector lead are wound is included in which constitution is made such that the positive electrode current collector lead is positioned opposite to the negative electrode mixture layer via the separator, and
the surface of the separator which is at least in contact with the positive electrode current collector lead has the resin layer and the porous layer.

3. The lithium ion secondary battery according to claim 1 or 2, wherein the negative electrode active material contains graphite and the alloy of silicon, and mixing mass ratio between the alloy and the graphite is 20 : 80 to 70 : 30.

4. The lithium ion secondary battery according to claim 1 or 2, wherein discharge capacity of the negative electrode is 600 Ah/kg or more and 1000 Ah/kg or less.

5. The lithium ion secondary battery according to claim 1 or 2, wherein the porous layer is at least one kind of silicon dioxide, aluminum oxide, montmorillonite, mica, zinc oxide, titanium oxide, barium titanate, and zirconium oxide.

6. The lithium ion secondary battery according to claim 1 or 2, wherein the resin layer is at least one kind of polyethylene, polypropylene, polyamide, polyamideimide, polyimide, polysulfone, polyether sulfone, polyphenyl sulfone, and polyacrylonitrile.

7. The lithium ion secondary battery according to claim 1 or 2, wherein the porous layer is disposed on both sides of the resin layer.

8. The lithium ion secondary battery according to claim 1 or 2, wherein the resin layer is prepared to have a constitution in which the first layer consisted of polypropylene, the second layer consisted of polyethylene, and the third layer consisted of polypropylene are laminated in this order.

9. A method for producing a lithium ion secondary battery comprising a step of laminating a positive electrode, a negative electrode, and a separator provided between the positive electrode and the negative electrode, wherein the negative electrode contains a negative electrode active material containing silicon, and
the separator has a constitution in which a resin layer and a porous layer are laminated, the thickness of the porous layer is set at 2 µm or more and 10 µm or less when the thickness of the resin layer is 25 µm or more and 30 µm or less, and the thickness of the porous layer is set at 5 µm or more and 20 µm or less when the thickness of the resin layer is 15 µm or more but less than 25 µm,
wherein the negative electrode active material containing silicon is an alloy of silicon which is Si₇₀Ti₁₅Fe₁₅, Si₇₀Cu₃₀, or Si₇₀Ti₃₀.

10. The method for producing a lithium ion secondary battery according to claim 9, wherein the lithium ion secondary battery comprises the negative electrode which has a negative electrode current collector and a negative electrode mixture layer disposed on the negative electrode current collector and contains the negative electrode active material, the positive electrode which has a positive electrode current collector, and a positive electrode mixture layer and a positive electrode mixture layer non-coated part disposed on the positive electrode current collector, and a positive electrode current collector lead disposed on the positive electrode mixture layer non-coated part, the negative electrode, positive electrode, and separator are wound such that the positive electrode current collector lead is positioned opposite to the negative electrode mixture layer via the separator, and the surface of the separator which is at least in contact with the positive electrode current collector lead has the resin layer and the porous layer.

11. The method for producing a lithium ion secondary battery according to claim 9 or 10, wherein the porous layer is at least one kind of silicon dioxide, aluminum oxide, montmorillonite, mica, zinc oxide, titanium oxide, barium titanate, and zirconium oxide, and
the resin layer is at least one kind of polyethylene, polypropylene, polyamide, polyamideimide, polyimide, polysulfone, polyether sulfone, polyphenyl sulfone, and polyacrylonitrile.

12. The method for producing a lithium ion secondary battery according to claim 9 or 10, wherein the porous layer is disposed on both sides of the resin layer.

13. The method for producing a lithium ion secondary battery according to claim 9 or 10, wherein the resin layer is prepared to have a constitution in which the first layer consisted of polypropylene, the second layer consisted of polyethylene, and the third layer consisted of polypropylene are laminated in this order.

## Patentansprüche

1. Lithiumionensekundärbatterie, umfassend:
eine positive Elektrode;
eine negative Elektrode; und
einen Separator, der zwischen der positiven Elektrode und der negativen Elektrode vorgesehen ist,
wobei die negative Elektrode ein aktives Material der negativen Elektrode enthält, das Silizium enthält, und
der Separator einen Aufbau besitzt, bei dem eine Harzschicht sowie eine poröse Schicht laminiert sind, wobei die Dicke der porösen Schicht 2 µm oder mehr und 10 µm oder weniger beträgt, wenn die Dicke der Harzschicht 25 µm oder mehr und 30 µm oder weniger beträgt, und die Dicke der porösen Schicht 5 µm oder mehr und 20 µm oder weniger beträgt, wenn die Dicke der Harzschicht 15 µm oder mehr jedoch weniger als 25 µm beträgt, wobei das aktive Material der negativen Elektrode, das Silizium enthält,
eine Legierung aus Silizium ist, die Si₇₀Ti₁₅Fe₁₅, Si₇₀Cu₃₀ oder Si₇₀Ti₃₀ umfasst.

2. Lithiumionensekundärbatterie nach Anspruch 1, wobei die negative Elektrode einen Stromkollektor der negativen Elektrode sowie eine Mischschicht der negativen Elektrode aufweist, die an dem Stromkollektor der negativen Elektrode angeordnet ist und das aktive Material der negativen Elektrode enthält, wobei die positive Elektrode einen Stromkollektor der positiven Elektrode und eine Mischschicht der positiven Elektrode sowie ein nicht mit der Mischschicht der positiven Elektrode beschichtetes Teil umfasst, das an den Stromkollektor der positiven Elektrode angeordnet ist,
eine Stromkollektorzuleitung der positiven Elektrode an dem nicht mit der Mischschicht der positiven Elektrode beschichteten Teil angeordnet ist und eine gewundene Gruppe, in der die positive Elektrode, die negative Elektrode, der Separator sowie der Stromkollektor der positiven Elektrode gewickelt sind, enthalten ist, wobei dieser Aufbau so hergestellt ist, dass die Stromkollektorzuleitung der positiven Elektrode gegenüber der Mischschicht der negativen Elektrode über den Separator positioniert ist, und
die Fläche des Separators, die zumindest in Kontakt mit der Stromkollektorzuleitung der positiven Elektrode steht, die Harzschicht und die poröse Schicht aufweist.

3. Lithiumionensekundärbatterie nach einem der Ansprüche 1 oder 2, wobei das aktive Material der negativen Elektrode Graphit und die Siliziumlegierung enthält, und das Misch-Massenverhältnis zwischen der Legierung und dem Graphit 20:80 bis 70:30 beträgt.

4. Lithiumionensekundärbatterie nach einem der Ansprüche 1 oder 2, wobei die Entladekapazität der negativen Elektrode 600 Ah/kg oder mehr und 1000 Ah/kg oder weniger beträgt.

5. Lithiumionensekundärbatterie nach einem der Ansprüche 1 oder 2, wobei die poröse Schicht zumindest eine Art von Siliziumdioxid, Aluminiumoxid, Montmorillonit, Mica, Zinkoxid, Titanoxid, Bariumtitanat und Zirkoniumoxid ist.

6. Lithiumionensekundärbatterie nach einem der Ansprüche 1 oder 2, wobei die Harzschicht zumindest eine Art von Polyethylen, Polypropylen, Polyamid, Polyamidimid, Polyimid, Polysulfon, Polyethersulfon, Polyphenylsulfon und Polyacrylonitril ist.

7. Lithiumionensekundärbatterie nach einem der Ansprüche 1 oder 2, wobei die poröse Schicht auf beiden Seiten der Harzschicht angeordnet ist.

8. Lithiumionensekundärbatterie nach einem der Ansprüche 1 oder 2, wobei die Harzschicht hergestellt ist, dass sie einen Aufbau aufweist, in der die erste Schicht, die aus Polypropylen besteht, die zweite Schicht, die aus Polyethylen besteht, und die dritte Schicht, die aus Polypropylen besteht, in dieser Reihenfolge laminiert sind.

9. Verfahren zum Erzeugen einer Lithiumionensekundärbatterie, mit einem Schritt zum Laminieren einer positiven Elektrode, einer negativen Elektrode und eines Separators, der zwischen der positiven Elektrode und der negativen Elektrode vorgesehen ist, wobei die negative Elektrode ein aktives Material der negativen Elektrode, das Silizium enthält, aufweist, und
der Separator einen Aufbau aufweist, in dem eine Harzschicht und eine poröse Schicht laminiert sind, wobei die Dicke der porösen Schicht auf 2 µm oder mehr und 10 µm oder weniger eingestellt ist, wenn die Dicke der Harzschicht 25 µm oder mehr und 30 µm oder weniger beträgt, und die Dicke der porösen Schicht auf 5 µm oder mehr und 20 µm oder weniger eingestellt ist, wenn die Dicke der Harzschicht 15 µm oder mehr, jedoch weniger als 25 µm beträgt,
wobei das aktive Material der negativen Elektrode, das Silizium enthält, eine Siliziumlegierung ist, die Si₇₀Ti₁₅Fe₁₅, Si₇₀Cu₃₀ oder Si₇₀Ti₃₀ ist.

10. Verfahren zum Erzeugen einer Lithiumionensekundärbatterie nach Anspruch 9, wobei die Lithiumionensekundärbatterie die negative Elektrode, die einen Stromkollektor der negativen Elektrode sowie eine Mischschicht der negativen Elektrode aufweist, die auf dem Stromkollektor der negativen Elektrode angeordnet ist und das aktive Material der negativen Elektrode enthält, die positive Elektrode, die einen Stromkollektor der positiven Elektrode und eine Mischschicht der positiven Elektrode sowie ein nicht mit der Mischschicht der positiven Elektrode beschichtetes Teil aufweist, das an dem Stromkollektor der positiven Elektrode angeordnet ist, und eine Stromkollektorzuleitung der positiven Elektrode umfasst, die an dem nicht mit der Mischschicht der positiven Elektrode beschichteten Teil angeordnet ist, wobei die negative Elektrode, die positive Elektrode und der Separator so gewickelt sind, dass die Stromkollektorzuleitung der positiven Elektrode über den Separator gegenüberliegend der Mischschicht der negativen Elektrode positioniert ist und die Oberfläche des Separators, die zumindest in Kontakt mit der Stromkollektorzuleitung der positiven Elektrode steht, die Harzschicht und die poröse Schicht aufweist.

11. Verfahren zum Erzeugen einer Lithiumionensekundärbatterie nach einem der Ansprüche 9 oder 10, wobei die poröse Schicht zumindest eine Art von Siliziumdioxid, Aluminiumoxid, Montmorillonit, Mica, Zinkoxid, Titanoxid, Bariumtitanat und Zirkoniumoxid ist, und
die Harzschicht zumindest eine Art von Polyethylen, Polypropylen, Polyamid, Polyamidimid, Polyimid, Polysulfon, Polyethersulfon, Polyphenylsulfon und Polyacrylonitril ist.

12. Verfahren zum Erzeugen einer Lithiumionensekundärbatterie nach einem der Ansprüche 9 oder 10, wobei die poröse Schicht auf beiden Seiten der Harzschicht angeordnet ist.

13. Verfahren zum Erzeugen einer Lithiumionensekundärbatterie nach einem der Ansprüche 9 oder 10, wobei die Harzschicht hergestellt ist, dass sie einen Aufbau aufweist, in dem die erste Schicht, die aus Polypropylen besteht, die zweite Schicht, die aus Polyethylen besteht, und die dritte Schicht, die aus Polypropylen besteht, in dieser Reihenfolge laminiert sind.

## Revendications

1. Batterie secondaire au lithium-ion comprenant :
une électrode positive ;
une électrode négative ; et
un séparateur placé entre l'électrode positive et l'électrode négative, dans laquelle l'électrode négative renferme un matériau actif d'électrode négative contenant du silicium, et
le séparateur a une structure dans laquelle une couche de résine et une couche poreuse sont stratifiées, l'épaisseur de la couche poreuse est égale ou supérieure à 2 µm et inférieure ou égale à 10 µm, lorsque l'épaisseur de la couche de résine est égale ou supérieure à 25 µm et inférieure ou égale à 30 µm, et l'épaisseur de la couche poreuse est égale ou supérieure à 5 µm et inférieure ou égale à 20 µm lorsque l'épaisseur de la couche de résine est égale ou supérieure à 15 µm et inférieure ou égale à 25 µm,
dans laquelle le matériau actif d'électrode négative contenant du silicium est une alliage de silicium qui est du Si₇₀Ti₁₅Fe₁₅, du Si₇₀Cu₃₀, ou du Si₇₀Ti₃₀.

2. Batterie secondaire au lithium-ion selon la revendication 1, dans laquelle l'électrode négative a un collecteur de courant d'électrode négative et une couche de mélange d'électrode négative disposée sur le collecteur de courant d'électrode négative et contient le matériau actif d'électrode négative, l'électrode positive a un collecteur de courant d'électrode positive, et une couche de mélange d'électrode positive et une partie non revêtue de couche de mélange d'électrode positive disposée sur le collecteur de courant d'électrode positive,
un fil de collecteur de courant d'électrode positive est disposé sur la partie non revêtue de la couche de mélange d'électrode positive et un groupe enroulé, dans lequel l'électrode positive, l'électrode négative, le séparateur, et le fil de collecteur de courant d'électrode positive sont enroulés, est inclus dans laquelle structure est fabriquée, de sorte que le fil de collecteur de courant d'électrode positive est positionné à l'opposé de la couche de mélange d'électrode négative par le biais du séparateur, et
la surface du séparateur, qui est au moins en contact avec le fil de collecteur de courant d'électrode positive, a la couche de résine et la couche poreuse.

3. Batterie secondaire au lithium-ion selon la revendication 1 ou la revendication 2, dans laquelle le matériau actif d'électrode négative contient du graphite et l'alliage de silicium, et le rapport en masse du mélange entre l'alliage et le graphite est de 20 : 80 à 70 : 30.

4. Batterie secondaire au lithium-ion selon la revendication 1 ou la revendication 2, dans laquelle la capacité de décharge de l'électrode négative est égale ou supérieure à 600 Ah/kg et inférieure ou égale à 1000 Ah/kg.

5. Batterie secondaire au lithium-ion selon la revendication 1 ou la revendication 2, dans laquelle la couche poreuse est au moins un type de substance parmi le dioxyde de silicium, l'oxyde d'aluminium, la montmorillonite, le mica, l'oxyde de zinc, l'oxyde de titane, le titanate de baryum, et l'oxyde de zirconium.

6. Batterie secondaire au lithium-ion selon la revendication 1 ou la revendication 2, dans laquelle la couche de résine est au moins un type de polymère parmi le polyéthylène, le polypropylène, le polyamide, le polyamide imide, le polyimide, le polysulfone, le polyéther sulfone, le polyphényl sulfone, et le poly acrylonitrile.

7. Batterie secondaire au lithium-ion selon la revendication 1 ou la revendication 2, dans laquelle la couche poreuse est disposée sur les deux côtés de la couche de résine.

8. Batterie secondaire au lithium-ion selon la revendication 1 ou la revendication 2, dans laquelle la couche de résine est préparée de sorte à avoir une structure, dans laquelle la première couche constituée de polypropylène, la deuxième couche constituée de polyéthylène, et la troisième couche constituée de polypropylène sont stratifiées dans cet ordre.

9. Procédé de fabrication d'une batterie secondaire au lithium-ion comprenant une étape de stratification d'une électrode positive, d'une électrode négative, et d'un séparateur placé entre l'électrode positive et l'électrode négative, dans lequel l'électrode négative renferme un matériau actif d'électrode négative contenant du silicium, et
le séparateur a une structure dans laquelle une couche de résine et une couche poreuse sont stratifiées, l'épaisseur de la couche poreuse est fixée égale ou supérieure à 2 µm et inférieure ou égale à 10 µm, lorsque l'épaisseur de la couche de résine est égale ou supérieure à 25 µm et inférieure ou égale à 30 µm, et l'épaisseur de la couche poreuse est fixé égale ou supérieure à 5 µm et inférieure ou égale à 20 µm lorsque l'épaisseur de la couche de résine est égale ou supérieure à 15 µm et inférieure ou égale à 25 µm,
dans lequel le matériau actif d'électrode négative contenant le silicium est un alliage de silicium qui est du Si₇₀Ti₁₅Fe₁₅, du Si₇₀Cu₃₀, ou du Si₇₀Ti₃₀.

10. Procédé de fabrication d'une batterie secondaire au lithium-ion selon la revendication 9, dans lequel la batterie secondaire au lithium-ion comprend l'électrode négative qui a un collecteur de courant d'électrode négative et une couche de mélange d'électrode négative disposée sur le collecteur de courant d'électrode négative et contient le matériau actif d'électrode négative, l'électrode positive qui a un collecteur de courant d'électrode positive, et une couche de mélange d'électrode positive et une partie non revêtue de couche de mélange d'électrode positive disposée sur le collecteur de courant d'électrode positive, et un fil de collecteur de courant d'électrode positive disposé sur la partie non revêtue de la couche de mélange d'électrode positive, l'électrode négative, l'électrode positive, et le séparateur sont enroulés de sorte que le fil de collecteur de courant d'électrode positive est positionné à l'opposé de la couche de mélange d'électrode négative par le biais du séparateur, et la surface du séparateur qui est au moins en contact avec le fil de collecteur de courant d'électrode positive a la couche de résine et la couche poreuse.

11. Procédé de fabrication d'une batterie secondaire au lithium-ion selon la revendication 9 ou la revendication 10, dans lequel la couche poreuse est au moins un type de substance parmi le dioxyde de silicium, l'oxyde d'aluminium, la montmorillonite, le mica, l'oxyde de zinc, l'oxyde de titane, le titanate de baryum, et l'oxyde de zirconium, et
la couche de résine est au moins un type de polymère parmi le polyéthylène, le polypropylène, le polyamide, le polyamide imide, le polyimide, le polysulfone, le polyéther sulfone, le polyphényl sulfone, et le poly acrylonitrile.

12. Procédé de fabrication d'une batterie secondaire au lithium-ion selon la revendication 9 ou la revendication 10, dans lequel la couche poreuse est disposée sur les deux côtés de la couche de résine.

13. Procédé de fabrication d'une batterie secondaire au lithium-ion selon la revendication 9 ou la revendication 10, dans lequel la couche de résine est préparée pour avoir une structure dans laquelle la première couche constituée de polypropylène, la deuxième couche constituée de polyéthylène, et la troisième couche constituée de polypropylène sont stratifiées dans cet ordre.
